# EUROPEAN PATENT SPECIFICATION

(11) **EP 3 478 058 B1**
(45) Date of publication and mention of the grant of the patent: **14.10.2020**
(21) Application number: 17748389.8
(22) Date of filing: 29.06.2017
(51) Int. Cl.: A01M 23/12

(54) **A TRAP AND A METHOD FOR USING A TRAP**
FALLE UND VERFAHREN ZUR VERWENDUNG EINER FALLE
PIÈGE ET PROCÉDÉ D'UTILISATION DE PIÈGE

(30) Priority: 29.06.2016 DK 201670467
(43) Date of publication of application: 08.05.2019
(73) Proprietor: Anticimex Innovation Center A/S, 3200 Helsinge (DK)
(72) Inventor: FRITZBØGER, Preben, 3250 Gilleleje (DK)
(74) Representative: Zacco Denmark A/S
(86) International application number: PCT/DK2017/050216
(87) International publication number: WO 2018/001431

(56) References cited:
- EP-A2- 0 159 634
- DE-A1-102014 016 514
- US-A- 5 953 853
- US-A1- 2009 313 880

## Description

The invention relates to a trap as set forth in claim 1.

Today, rat traps for being deployed in a sewer are typically of the type that either kills rats by means of a clap mechanism or with a mechanism capable of killing by means of eg a device that is capable of advancing one or more spikes. Most often, those traps are arranged in association with a sewer pipe, and they kill the rats within the sewer pipe as such that they are arranged to be in association with.

If the trap is provided with a mechanism capable of automatically withdrawing the spikes, the trap is capable of continuously killing rats in a sewer pipe, the killed rats being washed away by the water in the sewer pipe.

The drawback of this known type of traps is that it is a prerequisite for several successive killings (continuous operation) that the killings must take place in association with the water-carrying part of the sewer pipe.

This is not a problem in the type of sewer pipes where the sewer pipe as such has a size/dimension enabling that the rat is unable to pass by the trap in the pipe without coming into contact with the trap's killing mechanism. However, those conditions are, by far, not always complied with, and consequently traps of that type have a severe limitation of use, the trap not being suitable for killing rats continuously in those areas of a sewer that are not flushed by water.

In small sewers (wells/pipes) where the sewer pipe has a diameter of between 10 and 100 cm, those traps can be used - as mentioned above, and usually they are configured with a holder part inserted into the sewer pipe as such. When that type of trap is used, the rats are forced into the trap when they run through the sewer pipe since the trap partakes, with its holder part, as a completely natural extension/part of the sewer part. Therefore, those traps need not be provided with bait. Moreover, the trap also performs the killing as such in an area of the sewer where discharge of the killed rat entails that it is washed away by water, and this presents certain advantages.

As it is, by making such traps self-emptying and reactivating, they can be used to kill more rates since, following each killing, they merely release/discharge the rat into the sewer pipe and reactivate the killer mechanism.

Killed rats being thus washed away, there are no remains that warn other rats in the sewer pipe about the presence of a trap. In practice this means that those traps are very efficient and can be deployed for long periods of time, and the amount of killings performed between servicing operations may be considerable and is usually limited only by the trap's energy supply which is typically battery-based.

However, sewer pipes exist that have dimensions that are far bigger than the sewer pipes in which the known traps for continuous operation are used today, and quite a number of sewer pipes are even built to include walkways for humans along the sides of the sewer pipes. In that type of sewer pipes of larger type, use of the prior art traps that are configured for being inserted into the sewer pipe as such is not an option, since, on the one hand, the insertion part will no longer be able to retain the trap in the sewer pipe, and, on the other, the rats will be able to bypass the trap.

Moreover, it is not the usual behaviour of a rat to move in water-filled areas, but rather it is to move around in dry areas. In those large sewer pipes with walkways situated along the sides, traps that are arranged in water-filled areas will quite simply not serve their purpose since that is not where the rats are, as they would rather use the walkways.

This means that the prior art traps for continuous operation do not work optimally in this type of sewer pipes. Prior art documents in this technical field are for example: DE 10 2014 016514, US 5 953 853, US 2009/313880. These drawbacks can be partially obviated by use of traps having a built-in reservoir to which the killed rats are transferred. As it is, this type of trap can be used in areas of the sewers where water does not flow, such as eg at /near the above-mentioned walkways.

However, those reservoir-based traps have drawbacks, too, since they need to be provided with a power-intensive monitoring mechanism that is capable of notifying about emptying when the reservoir is nearly filled. All in all, this means that such reservoir-traps need servicing more frequently than traps that merely empty themselves.

It is an object of the invention to remedy those drawbacks.

This is accomplished in that the trap contains: a trap housing; a bait mechanism; a trigger mechanism capable of detecting the presence of a rat and releasing a killer mechanism when the rat is within the total range of the killer mechanism; a trapper mechanism capable of detaining a rat; a conveyor mechanism capable of transporting a killed rat from a first position, in which discharge of the killed rat will not entail that it is conveyed away by water running through the sewer, to a second position, in which discharge of the killed rat will entail that it is conveyed away by water running through the sewer; a programmable control unit connected to and adapted to: the trigger mechanism, the killer mechanism, the trapper mechanism, and the discharge mechanism to the effect that the control mechanism activates the trapper mechanism such that it detains a rat when the latter is detected by the trigger mechanism within the total range of the killer mechanism, said control unit also activating the killer mechanism and the conveyor mechanism to the effect that trapped and killed rats are conveyed from the first position to the second position; a unit for activating the trap.

By providing the trap with a conveyor mechanism capable of transporting a rat from a first position in which the rat is trapped to a second position in which the rat can be discharged it is obtained both: that the trap can be deployed and hence trap rats at/near those areas in sewers that are not flushed by water, and that the trap is capable of continuously killing several rats without there being a need for emptying a reservoir in the trap.

According to one embodiment the trap is characterised in that the trap housing is configured cylindrically, and that the trapper mechanism of the trap sits in an end portion of the trap housing. By such configuration of the trap it is accomplished that the trap can be deployed with the trap mechanism just above an area where rats move about, while simultaneously having the trapper part as the lowermost point on the deployed trap. Since it is the normal behaviour of the rat to approach unknown objects from an end portion, the rat will usually meet the trapper part first when it approaches the trap, and this means more killings.

According to one embodiment of the trap, the trapper mechanism can discharge the rat, irrespective of whether it is in the first position or in the second position. By configuring the trap such that a rat can be discharged both in the first position and in the second position, the trap can also be used in areas where water also runs just below the area where the trap captures the rats.

According to one embodiment the trapper mechanism can discharge the rat when it is the first position and in the second position. By adapting the trap such that it is capable of releasing a killed rat, whether or not it is located in the same place as the place in which it was caught and killed, or whether it has been moved to another position, the functionality has been improved since the trap can thereby also be used and deployed in areas where water flows.

According to one embodiment, the trapper mechanism may discharge the rat when it is any position between the first position and the second position. By adapting the trap such that it is capable of releasing a killed rat, whether it is in the same place as the place in which it was caught and killed or whether it has been moved partially to another position, the functionality has been improved, since the trap can thereby also be adapted to and used in sewers that vary in both size and configuration.

According to one embodiment of the trap, the conveyor mechanism of the trap comprises a hinge mechanism about which the trap can pivot, said hinge mechanism being adapted to be such that pivoting of the trap entails that a trapped rat is moved from first position to second position. Configuration of the trap with a hinge function is a simple way in which to accomplish that the trap's trapper mechanism can be moved across distances.

According to one embodiment of the trap, the trap's conveyor mechanism comprises a hinge mechanism deployed at that end portion of the trap housing which is opposite the trapper mechanism. By arranging the hinge opposite the trapper part optimal movability of the trapper part is obtained in a very simple manner as it can be moved in a circular arch whose radius is the length of the trap housing.

According to one embodiment of the trap, the conveyor mechanism comprises a telescopic mechanism capable of advancing the trapper mechanism such that it is moved from first position to second position. By use of a telescopic conveyor mechanism very precise delivery of the dead rat into the water flowing through a sewer can be obtained.

According to one embodiment of the trap, the conveyor mechanism comprises an adjustable chute capable of transporting a dead rat as it slides on the chute from one position to another position to the effect that it is moved from first position to second position. By using a telescopic conveyor mechanism it is possible to obtain a very precise delivery of the dead rat into the water flowing through a sewer.

According to one embodiment of the trap, the killer mechanism also serves as trapper part.

An embodiment of the invention will now be explained with reference to the figures, wherein:
Figure 1 is a schematic view of the trap deployed in the first position thereof;
Figure 2 is a schematic view of the trap deployed in a sewer where the trap's trapper/killer mechanism is not released;
Figue 3 is a schematic view of the trap deployed in a sewer wherein the trap's conveyor mechanism has conveyed the dead rat to second position;
Figure 4 is a schematic view of the trap arranged in a sewer wherein the trap's killer/trapper mechanism has discharged a rat in second position;
Figure 5 shows an embodiment of the trap, wherein the pivoting mechanism is combined with a telescopic mechanism.

In large sewer pipes, it may be associated with difficulties to secure a trap in the sewer pipe as such, and moreover problems may arise if there are differences between pipe dimension and trap dimension, since a trap having a comparatively small dimension seen relative to the pipe may enable the rats present in the pipes to simply bypass the trap. By the invention it is found that this problem can be solved by means of a trap configured with a conveyor mechanism. Thereby the trap can be deployed in a position in which it can/is to trap the rats, and by means of the transport mechanism it can release/discharge the rats in an another position.

Typically, the killing itself will take place in approximately the same position as the trapping, and usually it will happen in a "dry" area of the well. This means an area where water is not running during normal operation of the sewer. When the conveyor mechanism is activated, the rat will be conveyed from this "dry" area in the sewer to an area where the water runs in the sewer during normal operation, following which the dead rat will be removed by the water running in the sewer.

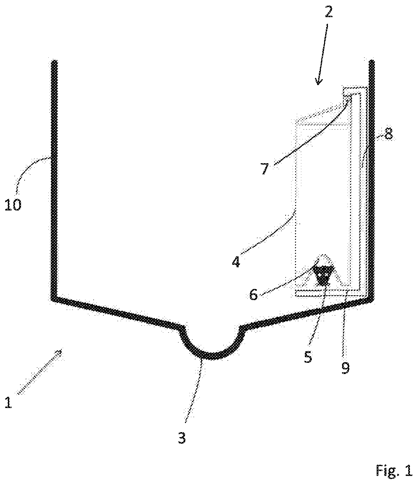

Figure 1 shows a trap for extermination of pest, preferably rats. The trap is shown deployed in a sewer well (1). Sewer wells are usually configured with round-going sidewall (10), and normally one or more sewer pipes traverse such wells at the bottoms thereof. One such sewer pipe (3) will also appear at the bottom of figure 1. The trap comprises a trap housing (4) containing ia the necessary electronics, motors and power supply. To the person skilled in the art it is obvious how to provide a trap with motors and power supply and control, which is why those means are not shown in the figures, and they will not be described in further detail. In the shown example, the trap housing (4) is suspended on the wall of the well by means of a fitting (8,9) comprising a bearing (7) to which the trap is secured. The trap housing is capable of rotating about that bearing.

Moreover, the trap comprises a bait mechanism which is also not shown in the figures. The bait mechanism will usually comprise a box containing a mechanism capable of emitting a smell which is attractive to rats. In its simplest form, the bait mechanism may be a passage in which rats may seek shelter.

Besides, the trap comprises a trigger mechanism (also not shown) capable of detecting the presence of a rat and releasing a killer mechanism when the rat is within the total range of the killer mechanism. Typically, this trigger mechanism is configured with an infrared sensor detecting the body heat from a rat. In the figures, the killer mechanism is a claw (9) also functioning as a holder/trapper mechanism.

As will appear from the figures, the "dry" area may be the bottom part of a sewer well (1) on/along a sidewall (10), and, as it will also appear from figures 1-5, the area in which the water (3) flows may be a traversing pipe deployed centrally at the bottom of the well. The use of the trap according to the invention is, of course, not limited to this.

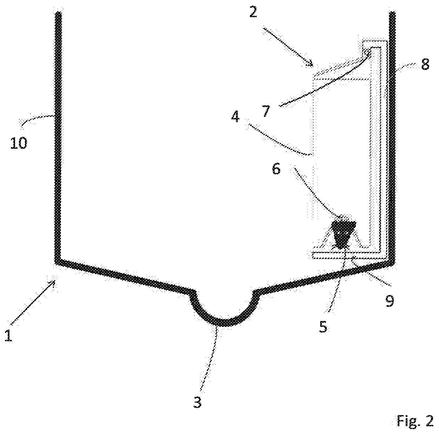

In figure 1, a trap (2) is shown deployed on and secured to a sidewall in the sewer. As can be gathered at reference numeral (6), the trap is provided with a claw-like mechanism which is not released in figure 1. If we now proceed to figure 2, it will appear, again at reference numeral (6), that the claw-like mechanism is now released and squeezes around the rat (5). The release as such of the claw (6) takes place by means of a trigger mechanism which is typically based on infrared measurement of the body heat from an animal. However, it is of course possible to use other kinds of trigger mechanisms.

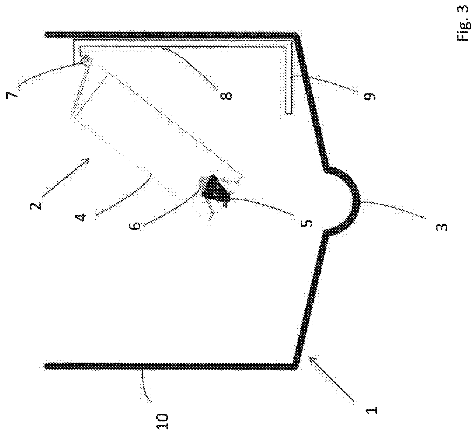

Figure 3 shows a trap according to the invention, wherein the conveyor mechanism is activated. In the shown example of figure 3, it is a tilting mechanism capable of tilting the entire trap housing (4) about a hinge (7). The degrees as such (the angle) to be/capable of being travelled by the trap in order for it to move a detained animal to a position above the pipe (3) is, in one version of the invention, programmed into the control of the trap whereby the trap can be adapted to different sizes of sewer wells.

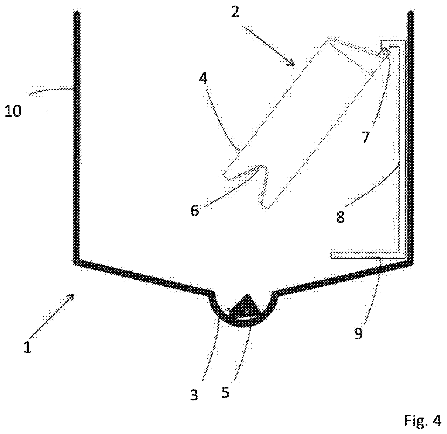

Now, figure 4 shows that the squeezer/killer mechanism (6) is released and has hence discharged the killed rat (5) whereby it has dropped down into the pipe (3). Now the trap will automatically revert to the starting position (as shown in figure 1) and activate/reactivate itself to enable killing of yet an animal/a rat.

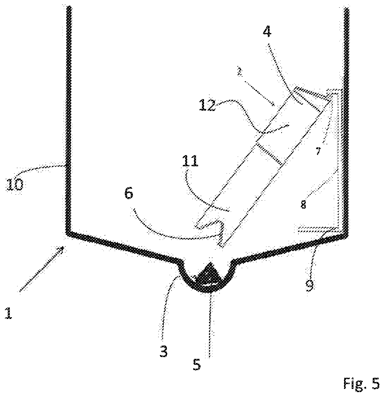

Figure 5 shows an embodiment of the trap wherein the pivoting mechanism is combined with a telescopic mechanism. By combining the pivoting mechanism with a telescopic mechanism it is obtained that the trap can be used in sewer pipes in which it could otherwise not have been used. As it is, sometimes traps need to be used in sewer wells having a dimension not making it possible that a mere pivoting of the trap, as shown in figures 1-4, can cause a killed rat to move beyond a centrally arranged pipe (3). In the example shown in figure 5, the trap is therefore also provided with a telescopic mechanism comprising two pipes (11 and 12) that can shifted mutually, in and out of each other, and hence extend the trap (the trap housing).

If the trap is provided with both a telescopic mechanism and a pivoting mechanism, they may operate in dependence of, but also independently of, each other, ie the mechanisms can be combined, but need not be.

Claims and specification describe a trap for rats in sewers. The trap is not limited to such use. Moreover, specification and claims use the terminology: bait mechanism; trigger mechanism; killer mechanism; trapper mechanism; conveyor mechanism, and activator mechanism.

By the term "bait mechanism" is intended any kind of mechanism capable of containing a bait that can "lure" a rat into the trap. Typically such bait mechanism will comprise a box in which a means emitting a smell which is attractive to the rat can be arranged.

By "trigger mechanism" is intended the mechanism that "triggers" the trap, ie a mechanism that is activated by the rat as such. Typically the trigger mechanism will comprise an infrared sensor which - when it detects body heat from a rat (or some other animal) - activates one or more parts of the trap. However, the trigger mechanism may also comprise other means, such as eg an impedance measurement device, sound-level meter, or a trapdoor/tilting mechanism activing one or more of the trap's other parts.

By the term "killer mechanism" is intended the mechanism that kills the rat, and it will typically be of a mechanical or electrical nature, such as something that squeezes the rat to death or kills by electrocution or a combination of such means. However, the killer mechanism is not limited thereto; rather it may in principle be everything that can kill a rat in the trap.

By the term "trapper mechanism" is intended a mechanism capable of detaining a rat, and it may be constituted by a variety of means, such as a clap mechanism as is known from the conventional rat/mouse traps. However, it may also comprise means that shut in the rat by closing off a part of the trap.

By the term "conveyor mechanism" is intended the mechanism that enables capturing of the rat in one place and subsequently conveying it to another place when it has been killed. Typically the distances which the rat is moved are within the ranges of from 0 cm - 150 cm, 10 cm - 100 cm, or 25 cm - 150 cm. The specification describes in particular one conveyor mechanism, and that conveyor mechanism conveys the trapper mechanism. This will be the usual way in which to configure the trap, but the conveyor mechanism may also be made such that it is an independent conveyor unit capable of transporting a dead rat from one position to another position. Such conveyor unit usually cooperates with the trapper mechanism in that the trapper mechanism delivers the dead rat to the conveyor mechanism; however, the delivery as such between trapper mechanism or killer mechanism and conveyor mechanism may also take place via an intermediary part delivering the rat from trapper/killer mechanism to the adjustable conveyor mechanism. The essential aspect here is that the distance from capturing to delivery is adjustable and can be adapted to the surroundings thereby enabling use of the trap in different contexts, including in particular different sewer sizes. The type as such of detainer mechanism or killer mechanism is thus also not a determining factor since a conveyor mechanism can be used with any kind of trap; including but not limited to eg traps that kill by means of electricity.

Moreover, the trap is described as a rat trap, and the term "rat" appears frequently. Of course, this is not intended to constitute a limitation towards the trap being suitable for use for the killing of rats only. As it is, the trap can readily be used to kill other rodents/pests, eg mice.

The phrase "activation" also appears in ia claims 1 and 9, and by that is merely intended that the trap is activated. The claims do not set forth a requisite sequence of the actions, meaning that such action can also be the first one to be performed when the trap is to be used, eg the first time, in a new place or following servicing operations. The phrase "activation" may also mean that the trap is reactivated which will necessarily be the case in case the trap has killed and becomes (self)activated again after that killing.

## Claims

1. A trap for exterminating animals causing damage, preferably rats in sewers, said trap comprising:
• a trap housing;
• a bait mechanism;
• a trigger mechanism capable of detecting the presence of a rat and releasing a killer mechanism when the rat is within the total range of the killer mechanism;
• a trapper mechanism capable of detaining a rat;
• a conveyor mechanism capable of transporting a killed rat from a first position, in which discharge of the killed rat will not entail that it is conveyed away by water running through the sewer, to a second position, in which discharge of the killed rat will entail that it is conveyed away by water running through the sewer;
• a programmable control unit connected to and adapted to: the trigger mechanism, the killer mechanism, the trapper mechanism, and the discharge mechanism to the effect that the control mechanism activates the trapper mechanism such that it detains a rat when the latter is detected by the trigger mechanism within the total range of the killer mechanism, said control unit also activating the killer mechanism and the conveyor mechanism to the effect that trapped and killed rats are conveyed from the first position to the second position;
• a unit for activating the trap.

2. A trap according to claim 1, **characterised in that** the trap housing is configured cylindrically, and that the trapper mechanism of the trap sits in an end portion of the trap housing.

3. A trap according to claims 1-2, **characterised in that** the trapper mechanism can discharge the rat when it is in the first position and in the second position.

4. A trap according to claims 1-3, **characterised in that** the trapper mechanism can discharge the rat when it is any position between the first position and the second position.

5. A trap according to claims 1-4, **characterised in that** the conveyor mechanism of the trap comprises a hinge mechanism around which the trap can pivot, said hinge mechanism being adapted to be such that pivoting of the trap entails that a trapped rat is moved from first position to second position.

6. A trap according to claims 2-5, **characterised in that,** the trap's conveyor mechanism comprises a hinge mechanism deployed at that end portion of the trap housing which is opposite the trapper mechanism.

7. A trap according to claims 1-4, **characterised in that** the conveyor mechanism comprises a telescopic mechanism capable of advancing the trapper mechanism such that it is moved from first position to second position.

8. A trap according to claims 1-3, **characterised in that** the conveyor mechanism comprises a hinge mechanism and a telescope mechanism, and that they cooperate to move the trapper mechanism such that it is moved from first position to second position.

9. A trap according to claims 1-8, **characterised in that** the transport mechanism comprises a hinge mechanism and a telescopic mechanism that are capable of moving the trapper mechanism independently of each other.

10. A trap according to claims 1-9, **characterised in that** the killer mechanism also serves as trapper part.

11. A method for exterminating sewer rats by means of a trap according to claims 1-10, said method comprising the following actions and measures:
• deployment of the trap in a first area of a sewer where the water does not have its natural course through the sewer;
• adjustment of conveyor mechanism such that it is capable of conveying a rat from a first area of the sewer without water to another area of the sewer, said second area of the sewer being located such that discharge of a rat means that the rat is discharged in a part of a sewer pipe through which water flows and is hence flushed away by the water;
• activation of the trap, whereby the killer mechanism, trigger mechanism, holder mechanism, and conveyor mechanism are activated whereby the trap is able to detect, kill and detain a rat in the first area of the sewer;
• activation of the bait mechanism;
• killing and detention of the rat;
• movement of the rat from first area to second area;
• discharge of the rat in the second area of the sewer;
• activation of the trap.

## Patentansprüche

1. Falle zur Ausrottung von Tieren, die Schäden verursachen, vorzugsweise Ratten in Kanalisationen, wobei die Falle Folgendes umfasst:
• ein Fallengehäuse;
• einen Ködermechanismus;
• einen Auslösemechanismus, der dazu im Stande ist, das Vorhandensein einer Ratte zu detektieren und einen Tötungsmechanismus auszulösen, wenn sich die Ratte innerhalb des gesamten Bereichs des Tötungsmechanismus befindet;
• einen Fangmechanismus, der dazu im Stande ist, eine Ratte festzuhalten;
• einen Fördermechanismus, der dazu im Stande ist, eine getötete Ratte von einer ersten Position, in welcher eine Entlassung der getöteten Ratte nicht zur Folge haben wird, dass sie von durch die Kanalisation strömendem Wasser weggefördert wird, zu einer zweiten Position, in welcher eine Entlassung der getöteten Ratte zur Folge haben wird, dass sie von durch die Kanalisation strömendem Wasser weggefördert wird, zu transportieren;
• eine programmierbare Steuereinheit, die mit Folgendem verbunden und an Folgenden angepasst ist: der Auslösemechanismus, der Tötungsmechanismus, der Fangmechanismus und der Entlassungsmechanismus mit dem Ergebnis, dass der Steuermechanismus den Fangmechanismus derart betätigt, dass er eine Ratte festhält, wenn diese durch den Auslösemechanismus innerhalb des gesamten Bereichs des Tötungsmechanismus detektiert wird, wobei die Steuereinheit auch den Tötungsmechanismus und den Fördermechanismus mit dem Ergebnis betätigt, dass gefangene und getötete Ratten von der ersten Position zu der zweiten Position gefördert werden;
• eine Einheit zur Betätigung der Falle.

2. Falle nach Anspruch 1, **dadurch gekennzeichnet, dass** das Fallengehäuse zylindrisch ausgebildet ist, und dass sich der Fangmechanismus der Falle in einem Endabschnitt des Fallengehäuses befindet.

3. Falle nach Anspruch 1-2, **dadurch gekennzeichnet, dass** der Fangmechanismus die Ratte entlassen kann, wenn sie sich in der ersten Position und in der zweiten Position befindet.

4. Falle nach Anspruch 1-3, **dadurch gekennzeichnet, dass** der Fangmechanismus die Ratte entlassen kann, wenn sie sich in jeder beliebigen Position zwischen der ersten Position und der zweiten Position befindet.

5. Falle nach Anspruch 1-4, **dadurch gekennzeichnet, dass** der Fördermechanismus der Falle einen Scharniermechanismus umfasst, um welchen herum die Falle schwenken kann, wobei der Scharniermechanismus dergestalt ausgelegt ist, dass ein Schwenken der Falle zur Folge hat, dass eine gefangene Ratte von der ersten Position zur zweiten Position bewegt wird.

6. Falle nach Anspruch 2-5, **dadurch gekennzeichnet, dass** der Fördermechanismus der Falle einen Scharniermechanismus umfasst, der an demjenigen Endabschnitt des Fallengehäuses angeordnet ist, der sich entgegengesetzt zum Fangmechanismus befindet.

7. Falle nach Anspruch 1-4, **dadurch gekennzeichnet, dass** der Fördermechanismus einen Teleskopmechanismus umfasst, der dazu im Stande ist, den Fangmechanismus dergestalt vorzuführen, dass er von der ersten Position zur zweiten Position bewegt wird.

8. Falle nach Anspruch 1-3, **dadurch gekennzeichnet, dass** der Fördermechanismus einen Scharniermechanismus und einen Teleskopmechanismus umfasst, und dass sie zusammenwirken, um den Fangmechanismus derart zu bewegen, dass er von der ersten Position zur zweiten Position bewegt wird.

9. Falle nach Anspruch 1-8, **dadurch gekennzeichnet, dass** der Transportmechanismus einen Scharniermechanismus und einen Teleskopmechanismus umfasst, die dazu im Stande sind, unabhängig voneinander den Fangmechanismus zu bewegen.

10. Falle nach Anspruch 1-9, **dadurch gekennzeichnet, dass** der Tötungsmechanismus auch als Fangteil dient.

11. Verfahren zur Ausrottung von Kanalratten mittels einer Falle nach Anspruch 1-10, wobei das Verfahren die folgenden Handlungen und Maßnahmen umfasst:
• Einsetzen der Falle in einen ersten Bereich einer Kanalisation, in welcher das Wasser keinen natürlichen Verlauf durch die Kanalisation aufweist;
• Einstellen des Fördermechanismus dergestalt, dass er dazu im Stande ist, eine Ratte von einem ersten Bereich der Kanalisation ohne Wasser zu einem anderen Bereich der Kanalisation zu fördern, wobei der zweite Bereich der Kanalisation so angeordnet ist, dass eine Entlassen einer Ratte bedeutet, dass die Ratte in einem mit Wasser durchströmten Teil eines Abwasserrohrs entlassen wird und somit von dem Wasser weggespült wird;
• Betätigung der Falle, wodurch der Tötungsmechanismus, der Auslösemechanismus, der Haltemechanismus und der Fördermechanismus betätigt werden, wodurch die Falle eine Ratte im ersten Bereich der Kanalisation detektieren, töten und festhalten kann;
• Betätigung des Ködermechanismus;
• Tötung und Festnahme der Ratte;
• Bewegen der Ratte vom ersten Bereich zum zweiten Bereich;
• Entlassung der Ratte im zweiten Bereich der Kanalisation;
• Betätigung der Falle.

## Revendications

1. Piège pour exterminer les animaux causant des dommages, de préférence des rats dans les égouts, ledit piège comprenant :
• un logement de piège ;
• un mécanisme d'appât ;
• un mécanisme de déclenchement capable de détecter la présence d'un rat et de libérer un mécanisme de tueur lorsque le rat se trouve dans la plage totale du mécanisme tueur ;
• un mécanisme de piégeur capable de détenir un rat ;
• un mécanisme de convoyeur capable de transporter un rat tué depuis une première position, dans laquelle le rejet du rat tué n'entraînera pas qu'il soit évacué par l'eau qui coule dans l'égout, vers une deuxième position, dans laquelle le rejet du rat tué va impliquer qu'il est évacué par l'eau qui coule dans l'égout ;
• une unité de commande programmable connectée et adaptée : au mécanisme de déclenchement, au mécanisme de tueur, au mécanisme de piégeur et au mécanisme de rejet de sorte que le mécanisme de commande active le mécanisme de piégeur de telle sorte qu'il détienne un rat lorsque ce dernier est détecté par le mécanisme de déclenchement dans la plage totale du mécanisme de tueur, ladite unité de commande activant également le mécanisme de tueur et le mécanisme de convoyeur de telle sorte que les rats piégés et tués soient transportés de la première position à la deuxième position ;
• une unité pour activer le piège.

2. Piège selon la revendication 1, **caractérisé en ce que** le logement de piège est configuré de façon cylindrique, et que le mécanisme de piégeur du piège se trouve dans une partie d'extrémité du logement de piège.

3. Piège selon les revendications 1 à 2, **caractérisé en ce que** le mécanisme de piégeur peut rejeter le rat lorsqu'il se trouve dans la première position et dans la deuxième position.

4. Piège selon les revendications 1 à 3, **caractérisé en ce que** le mécanisme de piégeur peut rejeter le rat lorsqu'il se trouve dans une position quelconque entre la première position et la deuxième position.

5. Piège selon les revendications 1 à 4, **caractérisé en ce que** le mécanisme de convoyeur du piège comprend un mécanisme d'articulation autour duquel le piège peut pivoter, ledit mécanisme d'articulation étant adapté pour être tel que le pivotement du piège entraîne le déplacement d'un rat piégé depuis la première position à la deuxième position.

6. Piège selon les revendications 2 à 5, **caractérisé en ce que** le mécanisme de convoyeur du piège comprend un mécanisme d'articulation déployé à la partie d'extrémité du logement de piège qui est opposée au mécanisme de piégeur.

7. Piège selon les revendications 1 à 4, **caractérisé en ce que** le mécanisme de convoyeur comprend un mécanisme télescopique capable d'avancer le mécanisme de piégeur si bien qu'il est déplacé de la première position à la deuxième position.

8. Piège selon les revendications 1 à 3, **caractérisé en ce que** le mécanisme de convoyeur comprend un mécanisme d'articulation et un mécanisme télescopique, et qu'ils coopèrent pour déplacer le mécanisme de piégeur si bien qu'il est déplacé de la première position à la deuxième position.

9. Piège selon les revendications 1 à 8, **caractérisé en ce que** le mécanisme de convoyeur comprend un mécanisme d'articulation et un mécanisme télescopique qui sont capables de déplacer le mécanisme de piégeur indépendamment l'un de l'autre.

10. Piège selon les revendications 1 à 9, **caractérisé en ce que** le mécanisme de tueur sert également de pièce de piégeage.

11. Procédé pour exterminer des rats d'égout au moyen d'un piège selon les revendications 1 à 10, ledit procédé comprenant les actions et mesures suivantes :
• le déploiement du piège dans une première zone d'un égout où l'eau n'a pas son cours naturel à travers le égout ;
• le réglage du mécanisme de convoyeur si bien qu'il est capable de transporter un rat d'une première zone de l'égout sans eau vers une autre zone de l'égout, ladite deuxième zone de l'égout étant située de telle sorte que la décharge d'un rat signifie que le rat est rejeté dans une partie d'une conduite d'égout à travers laquelle l'eau s'écoule et est donc évacué par l'eau ;
• l'activation du piège, grâce à quoi le mécanisme de tueur, le mécanisme de déclenchement, le mécanisme de détention et le mécanisme de convoyeur sont activés, ce qui permet au piège de détecter, de tuer et de détenir un rat dans la première zone de l'égout ;
• l'activation du mécanisme d'appât ;
• la mise à mort et la détention du rat ;
• le déplacement du rat de la première zone à la deuxième zone ;
• le rejet du rat dans la deuxième zone de l'égout ;
• l'activation du piège.
